# EUROPEAN PATENT APPLICATION

(11) **EP 2 466 535 A1**
(43) Date of publication of application: **20.06.2012**
(21) Application number: 10382328.2
(22) Date of filing: 03.12.2010
(51) Int. Cl.: G06Q 10/00

(54) **Method, system and device for managing and optimising shared resources**

(71) Applicant: La Compañia General de Imagen Y Diseño, S.A., 28020 Madrid (ES)
(72) Inventor: Carande de Andres, Jesús, 28020, Madrid (ES)
(74) Representative: Temino Ceniceros, Ignacio

(57) **Abstract**

Method for the management and optimisation of shared resources comprising four basic processes: (i) a first process for administering the system **100**; (ii) a second process for production management **200**; (iii) a third process for work management **300**; and (iv) a fourth process involving the management of information and data use **400**. Whereby the data on the products to be made are parameterized and divided into jobs and tasks under the second process 200, managed in the third 300 and displayed in the fourth process **400**.

## Description

The object of the invention is a method for the management and optimisation of shared resources in an automated fashion. The technical sector for which the invention is destined is that concerned with methods and systems for data processing specially adapted to the purposes of project and resource management.

### PRIOR ART

The different systems and methods for the management and optimisation of resources are well-known. Thus, document US2004/030992 reports an internet-integrated collaborative system and a method for managing a virtual company. This invention contemplates a computer program which provides internet integration for five important management processes. These processes include: (i) management of the user community and its roles; (ii) project management with risk evolution and management; (iii) document management; (iv) communications management to improve decision-making and notifications; and (v) quality management according to standards for products, services and programs.

Furthermore, it provides facilities to obtain the user's highest degree of productivity and predefined templates, as well as reports on progress, effort, cost, quality, stability, resource use and training. The resources assigned can be notified by email. Task management allows you to see their progress and expected completion date.

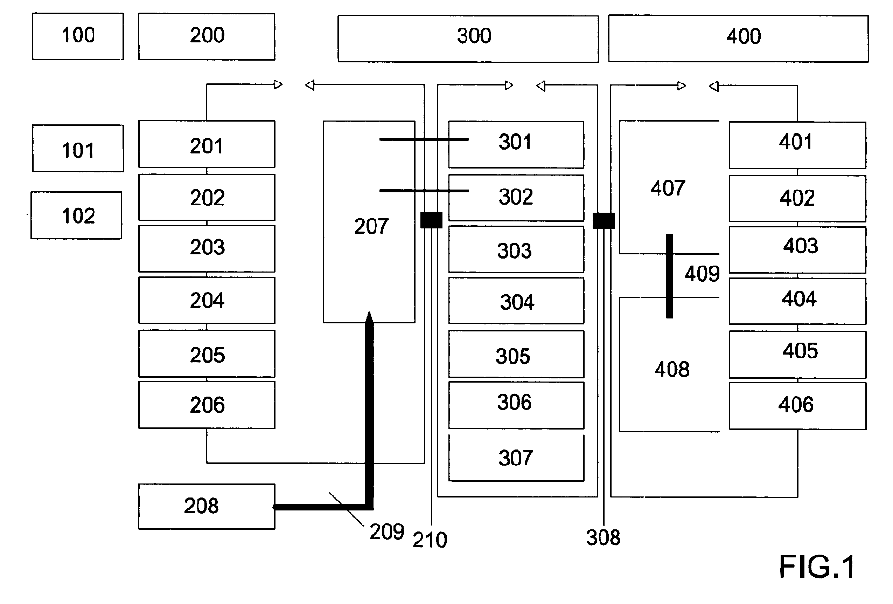

Publication US2009/240553 describes a system for managing workflow which is dynamically structured. Included for each task, at least, is information on the name and its details and, for each human resource, the professional profile and the skill that may be requested when search requests are being made, thus enabling the alignment of human resources and tasks. Assignment prioritisation criteria are included. FIG.1 of said document illustrates a system for workflow management which includes an element for the control of the graphical user interface, its content management system, and email subsystem.

Document US2007/203778 describes the methodology and the data processing flow management system. Each job is assigned to an employee by comparing job requisites and user skills, and its use is contemplated for the management of a business and the maintenance of an audit registry for their subsequent analysis, and the registry for obtaining workflow reports. Automatic assignment and the reassignment of work based on knowledge of the availability and capacities of personnel are contemplated. Distribution of work to multiple locations and the management of exceptions are facilitated. Users can manually create the items of a new job using templates offered by the application. Diverse information on performance and productivity reports for business management are presented.

Document US2010/023921 describes a method, a system and a computer-readable medium for the presentation, maintenance and support for the workflow management of a software factory. The processes, roles, activities, applications and parameters necessary for carrying out a development activity are formally managed for an optimum, cost-efficient and resource-use efficient and top quality result. It enables supervision and monitoring in order to reduce risks in software development. It contemplates users receiving software by email.

Last of all, document US2010/100412 describes a method for the management of workflow and the efficient assignment of human resources in an organisation for helping solve client problems, based on a dynamic and multidimensional resources network database, with an aim to optimising the return on investment and resources, as well as client satisfaction and the reduction in the cost of the service which is charged to clients. Machine-readable media and personnel and client data storage systems are contemplated.

### DESCRIPTION OF THE INVENTION

The object of the present invention is a method for managing and optimising shared resources, in such a way that a production procedure optimising resources in an automated fashion is obtained. Thus, the technical problem solved by the present method is that of the optimisation of the assignment of physical and human resources in the production of goods or a service.

The method controls and distributes production in an automatic fashion to all operators in the process. These jobs are assigned on demand. A method subprocess run on each user's machine requests a task for said user when the latter has not been assigned any task. At this time, an inquiry is made regarding jobs or tasks and they are adjudicated a task or job taking into account the following conditions:
i. If they have been pre-assigned a task because the user has already worked on some of the tasks of this job.
ii. The user's daily work profile or general work profile, which determines the type of jobs on which the user could work depending on the product, origin and type of task pending.
iii. Priority assigned to the work depending on the type of work and type of product, priority being given to preparatory work, defining the basic work variables, such as origin, product, etc., if the user has been enabled for this type of task.

Similarly, the method distributes the products in a definite fashion depending on the skills defined in the content editors, without the need for reprogramming or additional stages in the method. The jobs or tasks on which a user can work are defined in their daily work profile or general work profile by default. Said profile is defined depending on the type of task, type of product or specific product, as well as the origin of the work.

The method reinforces and supervises the quality control of the different products for each of the users selected, whereby quality control is defined for each product, depending on whether it passes quality control or not, with the result that a percentage of the work on each product will undergo quality control, except when the configuration of a specific user requires quality control always, in which case, the work carried out by this person will always be supervised by quality control.

Similarly, the average production times are supervised, as are incidents, and the corresponding alarms guaranteeing compliance with times are emitted. When a user is identified as a controller, the user is shown multiple graphs which allow them a global view of the job bank, in relation to both the state of the work and the type of tasks. Similarly, they are shown multiple markers in which the following can be viewed:
a. The number of tasks retained at that moment, depending on whether they are critical or not.
b. The number of tasks pending: assigned to a waiting list, assigned to pending and non-assigned.
c. The number of users at a standstill: users on downtime, users on downtime due to critical pause and users on pause.

Similarly, the method is capable of generating either written or graphic reports to the user in real time, as well as the possibility of generating a production log.

Throughout the description and claims, the word "comprises" and its variants does not pretend to exclude other technical characteristics, additives, components or steps. For experts in the subject, other objects, advantages and characteristics of the invention will inevitably develop in part from the description and in part from the practice of the invention. The following examples and drawings are provided by way of illustration, and they do not pretend to limit the present invention. In addition, the present invention covers all possible combinations of particular and preferred realisation specified herein.

### A BRIEF DESCRIPTION OF THE FIGURES

- FIG 1.: It shows a diagram of the method for the management and optimisation of shared resources, which is the object of the present invention.

### DETAILED ACCOUNT OF MODES OF REALISATION AND EXAMPLES

In general, the method for the management and optimisation of shared resources, which is the object of the present invention, is based on two major processes, which, though interrelated, are carried out independently: (i) a user management process; and (ii) a process for administering the application. The method is implemented in a web application developed in *.Net Framework* 3.5 technology. The platform runs on *Windows 2003 Server* ® and SQL *Server 2005* ® or a later version. The Web server is an *Internet Server 6.0* ® incorporated in the distribution of *Windows 2003 Server* ®. The method described runs on this application, in the form of two web interfaces: a first web application accessible for users of the controller, administrator or standard type; and a second specific web service for client application interaction (in-house for each user) and the central server.

More specifically, FIG.1 shows how the method which is the object of the invention is divided into four basic processes: (i) a first process for administering the system **100**; (ii) a second process for managing production **200**; (iii) a third process for managing work **300**; and (iv) a fourth process for managing information and data usage **400**.

As can be seen, the first process (100) for administering the system is defined by a stage involving the maintenance of basic data tables 101 and a stage involving the maintenance of entities 102. In other words, this process is a process of standard computer administration and application support, or, in other words, of support and administration of the remaining processes making up the present invention. These maintenance processes (101,102) consist essentially in taking data from the database, presenting them to the user in a form for said purpose and updating the data with the changes made by said user.

The second process **200** for production management is configured for the administration, management and parameterization of the work and tasks implied in the production of a certain product, as well as the parameterization and management of the users of the application involved in production tasks. This process is made up of a number of stages which, in normal operation of the method, can be run in a parallel fashion, in sequence and/or independently of each other. Said stages comprise, at least:
i. A first stage involving the configuration of types of products **201**, whereby the user defines the type of product to be made. Thus, by way of example, we can have a "VIDEO" product, to which a certain code is associated, "VCR", it is assigned an *active*/*inactive* status depending on whether the product is to be launched to production or not, and multiple fields associated with said product are defined, such as *client data*, *comments*, *sales codes*, *etc.* The number of products that can be defined is *n*, said number being limited only by the producer's own capacity.
ii. A second stage involving the configuration of types of work **202** which is configured to create multiple jobs which are associated with each product defined in the first stage 201. By way of example, for the "VIDEO" product defined in the previous stage, the following jobs can be created and assigned, by way of a non-limiting example: *"matching"*, *"validation"*, *"production"*, *"proofing"* and *"publication"*; whereby each of these jobs is likewise identified by a code colour, with an aim to facilitating their quick display and identification. In addition, said job can be defined as "automatically imported" or not, from external repositories and interfaces **208**.
iii. A third stage for the configuration of types of tasks **203** which is associated with each job previously defined in the second stage **202**. Thus, by way of example, under *"production"* work, at this stage, a series of specific tasks are created and assigned, by way of a non-limiting example: *"report"*, *"data validation"*, *"data insertion"*, *"authorisation"*, etc. A series of parameters is defined for each of these tasks, such as, for example, if said task is standard, a brief description of the task to be carried out, by way of a dialogue between the supervisor and the operator (both being users of the application), the setting of the expiry date for the task and the assignation of a certain work profile. Specifically, for each edition of a task, as has already been pointed out, it is necessary to:
   a. Define the work to which it pertains
   b. Define its current status: active/inactive
   c. Describe it
   d. Type of task.
   e. Profile of the operator in charge of carrying it out: each task can be carried out by different operators. Thus, there will be tasks to be carried out by authorised users, by controllers, by system administrators or others that may be defined.
   f. Type of expiry date (days, or others predefined) and days for the expiry.
      Subsequently, it must be decided which type of action to take in the event of the correct completion of the task, such as continuing with the normal flow of work or generating a sub-task (to be defined by the user). Likewise defined is the type of action in the event of incorrect validation, such as mark as an incident, generate an incident or automatically accept. Last of all, the type of action to be taken in the event of expiry must be indicated, such as, for example, mark as expired, generate an incident or automatically accept. Depending on the type of task selected, the already mentioned fields can be configured, such as the possible sub-tasks to be carried out.
iv. A fourth stage involving the configuration of users **204** whereby said stage is configured for the definition of work profiles and the user's general profile. In this stage, all the options necessary for the users' roles are defined and configured, from the types of access to the application (by notification by mail, standard access, etc.) to the data they are shown of a contract/job (codes, client names, etc.). The parameterization is general for a role and is inherited by the users assigned this role, including clients. Similarly, it is possible to add and remove users from the system related to their action profiles and work profiles (controller, authorised user, administrator, etc.).
v. A fifth stage involving configuring priorities **205**, carried out by the controllers themselves, whereby, in the case of each specific product, job or task, priority is assigned depending on its importance, and the preparatory jobs or tasks, that is, the definition of the basic work variables, such as origin, type of product, etc. have priority over the rest of the jobs or tasks.
vi. A sixth stage concerning quality control **206** of the task or job done, whereby said quality control is defined for each product (it will or will not pass quality control) with the result that only a percentage of jobs done for each product will pass said quality control, except when the configuration of a specific user requires qualify control always, in which case, the work carried out by this person will always be supervised by quality control, this being particularly useful for cases involving the supervision of new users or new tasks, as its objective is precisely the revision of the content and characteristics of the type of product.

In general, the variables that affect the working are those that define the work, that is: the origin, type of work, the type of product, the concrete product, and the tasks that must be carried out for this work. The rest of the fields, as well as the work sheets generated, are merely informative. The works sheets are based on templates which are totally configurable by the user authorised for this purpose. Associated to each product is a template which must be completed by the user. The fields contained in each template are variable and the administrator will define them for each concrete case when creating said templates.

Similarly, the user, as an option, will complete the invoice sheet on completing each task. This invoice sheet is based on invoicing templates, with concepts which are defined by the administrator when creating them.

With respect to the basic aforementioned variables for each stage described, what they determine is the priority with which said work or task will be carried out, as well as the users which can intervene, the steps which must be taken for its completion, the work sheet template which will be used, and the invoice template. In other words, the variables which will intervene in subsequent algorithms are: origin, type of work, type of product, product and tasks to be carried out. The algorithms in which they will intervene are: task distribution and assignment, as well as the determination of the type of template to be used for the work sheets and the type of template to be completed for the invoicing hour.

The third process of work management **300** comprises the management of products, jobs and tasks defined in the second process **200**. To this end, the third process directly takes the data **210** from the task inventory **207** in turn connected to the external repositories and interfaces **208** configured for the automatic import of data.

The stage involving the automatic import of data from external repositories and interfaces **208** imports possible jobs from two possible origins:
- FTP repository: connects with a given frequency to an ftp server in which the information on products and jobs assigned has been digitalised, and deposited in documents. Once said documents are imported **209**, the corresponding products and jobs are added to the task inventory **207**.
- File repository: it collects the files entered through the Web application and carries out the corresponding import, importing **209** the jobs in the task inventory **207** and completing the information by means of a VPN connection.

The third process for work management **300**, in turn, comprises the following stages:
i. A first stage involving contract management **301** configured for the internal management of product orders.
ii. A second stage involving work management **302**.
iii. A third stage for the management of preparation and invoicing of the task **303**.
iv. A fourth stage for the management of tasks, edition, indexing, etc., and invoicing the task **304**.
v. A fifth stage for the management of quality control **305**
vi. A sixth stage involving the management of workers **306**
vii. A seventh stage involving the management of reassignments and flows **307**.

In the fourth stage for the management of information and data use **400**, the data processed in the third process 300 are displayed. To this end, the data from said process are taken **308** and two data files are generated: a first general file of task events **407** connected **408** to a second general file of user events **409**. These files can be used to generate the following stages of the process: (i) a first stage of executive queries **401**; (ii) a second stage on work performance consultation **402**; (iii) a third stage involving task performance consultation **403**; (iv) a fourth stage concerning workers' performance consultation **404**; (v) a fifth stage on product performance **405**; and (vi) a sixth stage on billing results **406**.

Monitoring displays allow the controller, administrator, etc. to view the work currently under production and act on it. The displays resulting from previous stages can be grouped under three major groups:
- Display of work: whereby a list of all the work is shown, allowing the results to be filtered by means of a series of parameters, such as status, if there are associated documents or not, contract, sheet, advertisement, type of work, origin, type of repository, product or if it undergoes quality control or not.
- Display of tasks: it shows a list of concrete tasks which are being carried out at that moment, allowing them to be filtered according to status, type of task, date on which it was generated, user assigned, priority, contract, advertisement, type of work, origin, type of product, the rejection generated by the task (showing the detail of the concrete users who rejected it and when they rejected it). In addition, from this list, the controller is able to retain or re-establish a task, as well as re-assign it to another user. When the controller carries out any of these actions, the users assigned the task will receive a message informing them of what has happened. This message may be accompanied by an observation entered by the controller when carrying out the action. Depending on the type of action, the user may or may not continue working. For example, if the controller retains the task in a critical fashion, the user receives a message informing them of the fact, the task is blocked, it not being possible to modify it, and the user is placed on stand-by until the task is re-established without the possibility to work on other tasks. On the other hand, if the controller retains the task, without indicating critical pause, the user receives a message informing them of the fact, and is automatically assigned a new task on which they will be able to work until the retained task is re-established, on which occasion they receive a new message informing them that it has been re-established. In the event of reassignment to another user, the current user receives a message informing them that the task has been withdrawn from them and the system will assign them a new task to perform.
- Display of users: it shows a list of all the system users, allowing us to see the status of each user's work session (Active, inactive, on hold), the status of the work being carried out at that time (Active, inactive, on hold, retained, stopped = critical pause), user's name and surnames, as well as the counters corresponding to the number of tasks which each user has in pending status, active, on hold, critical retentions, retained, suspended, completed and rejected.

There are really no automation processes at this point. In fact, it is the controllers, depending on the information received from these monitoring displays, as well as volume counters and graphs, who draw their conclusions and act while modifying priorities according to their criteria, modifying user work profiles, etc.

Last of all, it must be pointed out that the application has the following basic operation for workers:
The user starts the session in the application. The system checks if they have been assigned any task or request the system to assign a new one. In this case, the system uploads the details of the job on which the user will have to work. If, while the user has the work, any external action is carried out on it, (retention/re-establishment on the part of the controller, reassignment, etc.) the user will be notified and the task will be blocked/unblocked in their application, or they will be allowed to start a new task if necessary. Likewise, the user will be able to make a pause (critical or standard), in this case, it being the controller who receives the notification. They will be entitled to complete the task they have been assigned and proceed to complete its invoicing sheet, etc.

On the other hand, all aspects of the application can be configured for the administrators, with the possibility to add, modify or remove:
- Users.
- Each user's work profile
- Origins
- Types of products
- Products
- Types of work
- Shifts/Work groups
- Types of contract
- Management of work sheet templates and concepts
- Management of invoice templates and concepts.
- Management of general parameters: parameters for access to the ftp, frequency of import from the repository, days of the week on which said imports are made, as well as the timetable, number of jobs released automatically to the job bank, configuration of VPN access, etc.

In addition, it allows controllers and administrators access to:
- The configuration of priorities
- The parameterization of quality control: Percentage of the work which will undergo quality control depending on the type of task.
- Management of contracts and work, with complete access to all the details of each job: Work sheets, invoicing sheets, observations, task log, etc.
- Monitoring displays of jobs, tasks and users: already described in previous points.
- Work sessions: it enables the display of the specific sessions of each user, with pauses, starting times, etc. for a specific date. It likewise gives the total times in pause and active.
- Counter graphs: It allows the display of four graphs which illustrate the distribution of jobs according to origin, jobs according to status, and jobs according to type of work and tasks according to type of task.

## Claims

1. Method for the management and optimization of shared resources which comprises four basic stages: (i) a first process for administering the system (100); (ii) a second process for production management (200); (iii) a third process for work management (300); and (iv) a fourth process for information management and data use (400); and whereby said method **is characterized because** the second process (200) for production management is configured for the administration, management and parameterization of the jobs and tasks implied in the production of a certain product, as well as for the parameterization and management of the application users involved in the production tasks, and comprises the stages of:
(i) a first stage of configuration of product types (201), whereby the user defines the type of product to be made; and whereby the number of products which can be defined is n, said number being limited only by the producer's own capacity;
(ii) a second stage involving the configuration of types of work (202) which is configured to create multiple jobs which are associated with each product defined in the first stage (201);
(iii) a third stage for the configuration of types of tasks (203) which is associated with each job previously defined in the second stage (202); whereby, for each edition of a task: (a) the work to which it pertains is defined; (b) its current status is defined: active/inactive/on hold; (c) it is described; (d) the type of task is specified; (e) the profile of the operator in charge of performing it is defined; and (f) the type of expiry and its duration is defined; and whereby, subsequently, it must be decided which type of action must be taken in the event of the correct completion of the task; the type of action in the event of incorrect validation is defined; and the type of action to be taken in the event of expiry must be specified;
(iv) fourth stage involving the configuration of users (204) whereby, at said stage, it is configured for defining the work profiles and general profile of the user, defining and configuring all the necessary options of the users' roles;
(v) a fifth stage for configuring priorities (205), whereby, for each specific product, job or task, priority is assigned depending on its importance, and whereby the preparatory jobs or task, that is, the definition of the basic work variables, such as origin, type of product, etc. have priority over the rest of the jobs or tasks; and
(vi) A sixth stage concerning quality control (206) of the task or job done, whereby said quality control is defined for each product (it will or will not pass quality control) with the result that only a percentage of jobs done for each product will pass said quality control, except when the configuration of a specific user requires quality control always, in which case, the work carried out by this person will be supervised by quality control;
and, once the data have been parameterized, they will be managed in the third process (300), the data from said management will be displayed in the fourth process (400), as well as returning to quality control to review a requested correction.

2. Method in accordance with claim 1 which is characterised because the third process involving work management (300), in turn, comprises the following stages: (i) a first stage for contract management (301) configured for the internal management of product orders; (ii) a second stage of job management (302); (iii) a third stage of preparation and invoicing of the task (303); (iv) a fourth stage of management of tasks, edition, indexing, etc. and invoicing of the task (304); (v) a fifth stage of quality control management (305); (vi) a sixth stage involving the management of workers (306); and (vii) a seventh stage for the management of re-assignments and flows (307).

3. Method in accordance with claims 1 and 2 which is characterised because, in the fourth process for information management and data use (400), the data processed in the third process are displayed (300); and whereby, to this end, the data (308) from said process are taken and two data files are generated: a first general file of task events (407) connected (408) to second general file of user events (409); by means of these files the following stages of the process can be generated: (i) a first stage involving executive queries (401); (ii) a second stage of consultation on work performance (402); (iii) a third stage on task performance consultation (403); (iv) a fourth stage on the consultation of workers' performance (404); (v) a fifth stage on product performance (405); and (vi) a sixth stage on billing results (406).

## Amended claims

### Amended claims in accordance with Rule 137(2) EPC.

**1.** Method for the management and optimization of shared resources which is based in two major processes, which are interrelated and carried out independently, being said processes a user management process and a process for administering the application and the method is implemented in a web application in the form of two web interfaces, a first web application accessible for users of the controller, administrator or standard type and a second specific web service for client application interaction (in-house for each user) and the central server; and the method comprises four basic stages: (i) a first process for administering the system (100); (ii) a second process for production management (200); (iii) a third process for work management (300); and (iv) a fourth process for information management and data use (400); and whereby said method is **characterized** because the second process (200) for production management is configured for the administration, management and parameterization of the jobs and tasks implied in the production of a certain product, as well as for the parameterization and management of the application users involved in the production tasks, and comprises the stages of:
(i) a first stage of configuration of product types (201), whereby the user defines the type of product to be made; and whereby the number of products which can be defined is n, said number being limited only by the producer's own capacity;
(ii) a second stage involving the configuration of types of work (202) which is configured to create multiple jobs which are associated with each product defined in the first stage (201);
(iii) a third stage for the configuration of types of tasks (203) which is associated with each job previously defined in the second stage (202); whereby, for each edition of a task: (a) the work to which it pertains is defined; (b) its current status is defined: active/inactive/on hold; (c) it is described; (d) the type of task is specified; (e) the profile of the operator in charge of performing it is defined; and (f) the type of expiry and its duration is defined; and whereby, subsequently, it must be decided which type of action must be taken in the event of the correct completion of the task; the type of action in the event of incorrect validation is defined; and the type of action to be taken in the event of expiry must be specified;
(iv) fourth stage involving the configuration of users (204) whereby, at said stage, it is configured for defining the work profiles and general profile of the user, defining and configuring all the necessary options of the users' roles;
(v) a fifth stage for configuring priorities (205), whereby, for each specific product, job or task, priority is assigned depending on its importance, and whereby the preparatory jobs or task, that is, the definition of the basic work variables, such as origin, type of product, etc. have priority over the rest of the jobs or tasks; and
(vi) A sixth stage concerning quality control (206) of the task or job done, whereby said quality control is defined for each product (it will or will not pass quality control) with the result that only a percentage of jobs done for each product will pass said quality control, except when the configuration of a specific user requires quality control always, in which case, the work carried out by this person will be supervised by quality control;
and, once the data have been parameterized, they will be managed in the third process (300), the data from said management will be displayed in the fourth process (400), as well as returning to quality control to review a requested correction.

**2.** Method in accordance with claim 1 which is **characterised** because the third process involving work management (300), in turn, comprises the following stages: (i) a first stage for contract management (301) configured for the internal management of product orders; (ii) a second stage of job management (302); (iii) a third stage of preparation and invoicing of the task (303); (iv) a fourth stage of management of tasks, edition, indexing, etc. and invoicing of the task (304); (v) a fifth stage of quality control management (305); (vi) a sixth stage involving the management of workers (306); and (vii) a seventh stage for the management of re-assignments and flows (307).

**3.** Method in accordance with claims 1 and 2 which is **characterised** because, in the fourth process for information management and data use (400), the data processed in the third process are displayed (300); and whereby, to this end, the data (308) from said process are taken and two data files are generated: a first general file of task events (407) connected (408) to second general file of user events (409); by means of these files the following stages of the process can be generated: (i) a first stage involving executive queries (401 ); (ii) a second stage of consultation on work performance (402); (iii) a third stage on task performance consultation (403); (iv) a fourth stage on the consultation of workers' performance (404); (v) a fifth stage on product performance (405); and (vi) a sixth stage on billing results (406).
